# EUROPÄISCHE PATENTSCHRIFT

(11) **EP 2 999 565 B1**
(45) Veröffentlichungstag und Bekanntmachung des Hinweises auf die Patenterteilung: **30.10.2019**
(21) Anmeldenummer: 14723808.3
(22) Anmeldetag: 14.05.2014
(51) Int. Cl.: B23C 5/28, B23C 5/26, B23Q 11/10, B23B 31/11

(54) **WERKZEUGAUFNAHME**
TOOL HOLDER
ATTACHEMENT D'OUTIL

(30) Priorität: 22.05.2013 DE 102013105206
(43) Veröffentlichungstag der Anmeldung: 30.03.2016
(73) Patentinhaber: Franz Haimer Maschinenbau KG, 86568 Hollenbach-Igenhausen (DE)
(72) Erfinder: HAIMER, Franz, 86568 Igenhausen (DE)
(74) Vertreter: Schwarz, Wolfgang
(86) Internationale Anmeldenummer: PCT/EP2014/059831
(87) Internationale Veröffentlichungsnummer: WO 2014/187707

(56) Entgegenhaltungen:
- EP-A1- 0 579 371
- WO-A2-2009/140109
- CN-U- 202 137 617
- DE-A1- 4 004 150
- DE-A1- 4 019 506
- GB-A- 2 332 161
- JP-A- 2005 022 063
- JP-A- 2008 018 486
- JP-U- S62 192 819

## Beschreibung

Die Erfindung betrifft eine Werkzeugaufnahme nach dem Oberbegriff des Anspruchs 1 und eine Werkzeuganordnung nach dem Oberbegriff des Anspruchs 11.

Eine gattungsgemäße Werkzeugaufnahme ist aus der DE 40 19 506 A1 bekannt. Diese weist einen Grundkörper und einen Aufnahmezapfen auf, auf den ein als Messerkopf ausgebildetes Rotationswerkzeug mit einer korrespondierenden Aufnahmebohrung aufsetzbar ist. In der Werkzeugaufnahme ist ein am Außenumfang des Aufnahmezapfens mündender Kanal zum Transport von Kühl- bzw. Schmiermittel angeordnet. Über mehrere Kühlmittelbohrungen in dem Messerkopf wird das Kühl- bzw. Schmiermittel anschließend zu den Schneidplatten des Messerkopfs geleitet. Die Befestigung des Rotationswerkzeugs erfolgt hier mittels einer Schraube, die auf der vorderen Stirnseite des Aufnahmezapfens in ein entsprechendes mittig angeordnetes Gegengewinde in dem Aufnahmezapfen eingeschraubt wird und damit das Rotationswerkzeug gegen die Werkzeugaufnahme verspannt. Um Kühl- bzw. Schmiermittel bis zu den Schneiden des Rotationswerkzeugs zu leiten ist in dem ringförmigen Steg des Aufnahmezapfens zwischen dem Innengewinde und dem Außenumfang mindestens ein Kanal für das Kühl- bzw. Schmiermittel angeordnet. Gerade bei kleineren Werkzeugaufnahmen mit kleineren Durchmessern der Aufnahmezapfen wird die Steifigkeit und Festigkeit durch diese Kühl- bzw. Schmierkanäle zusätzlich stark reduziert, so dass ein Bruch nicht zuverlässig vermieden werden kann. Zur Fertigung dieser Kanäle müssen zudem angewinkelte Bohrungen in den Aufnahmezapfen eingebracht werden, was äußerst aufwendig ist. Zudem wird auch durch die geringen Wandstärken im Bereich der Kühlmittelbohrungen das zumeist notwendige Härten des Aufnahmezapfens erschwert, da es leicht zu Spannungsrissen kommen kann.

Aufgabe der Erfindung ist es, eine kostengünstige und einfach herstellbare Werkzeugaufnahme und eine Werkzeuganordnung mit einer derartigen Werkzeugaufnahme zu schaffen, die ohne großen Fertigungsaufwand eine Kühlung der Schneiden des Rotationswerkzeugs ermöglichen.

Diese Aufgabe wird durch eine Werkzeugaufnahme mit den Merkmalen des Anspruchs 1 und durch eine Werkzeuganordnung mit den Merkmalen des Anspruchs 11 gelöst. Vorteilhafte Ausgestaltungen der Erfindung sind in den Unteransprüchen angegeben.

Die erfindungsgemäße Werkzeugaufnahme zeichnet sich dadurch aus, dass am Außenumfang des Aufnahmezapfens mindestens eine Längsnut zur Leitung des Kühl- bzw. Schmiermittels in Längsrichtung des Aufnahmezapfens zu dessen vorderer Stirnseite angeordnet ist. Die Längsnuten können parallel zur Längsrichtung des Aufnahmezapfens, aber auch spiralförmig verlaufen. Die Fertigung dieser bevorzugt mit kreissegmentförmigem Querschnitt ausgebildeten Längsnuten kann deutlich einfacher erfolgen, als es bei den zumeist schrägen Bohrungen aus dem Stand der Technik möglich ist.

Bevorzugt mündet der mindestens eine Kanal am Übergang des Aufnahmezapfens zu dem Grundkörper. Dies gewährleistet, dass der Aufnahmezapfen zum überwiegenden Teil keine Querschnittsreduzierung und damit keine Schwächung durch den mindestens einen Kanal erfährt.

Um eine besonders reibungsarmen und strömungsgünstigen Übergang für das Kühl- bzw. Schmiermittel zu schaffen, ist bevorzugt vorgesehen, dass der mindestens eine Kanal in einer Längsnut mündet.

In einer besonders bevorzugten Ausführungsform können an dem Außenumfang des Aufnahmezapfens mehrere Längsnuten angeordnet sein, die durch eine in Umfangsrichtung des Aufnahmezapfens verlaufende Ringnut verbunden sind. Durch die Ringnut kann eine Verteilung des Kühl- bzw. Schmiermittels erfolgen. Dies ist besonders dann von Vorteil, wenn mit nur wenigen Kanälen das Schmiermittel zu den Nuten geleitet wird und dort dann verteilt werden kann. Durch die geringere Anzahl an Kanälen ergibt sich wiederum eine geringe Schwächung des Aufnahmezapfens. Für eine reibungsarmen und strömungsgünstigen Übergang des Kühl- bzw. Schmiermittels ist bevorzugt vorgesehen, dass der mindestens eine Kanal in dieser Ringnut mündet. Die Ringnut kann durchgehend oder abschnittsweise am Außenumfang des Aufnahmezapfens angeordnet sein. Ausgehend von der Ringnut kann dann eine weitere Verteilung des Kühl- bzw. Schmiermittels auf die Längsnuten erfolgen.

Der Aufnahmezapfen kann an seinem Außenumfang einen umlaufenden Zentriersteg aufweisen. Dieser Zentriersteg ist ausgelegt, um kraftschlüssig dichtend mit dem Rotationswerkzeug zusammenzuwirken, so dass ein Durchgang von Kühl- bzw. Schmiermittel an dem Zentriersteg unterbunden wird. Hierdurch kann eine zuverlässige Abdichtung erreicht werden.

Um einen ungewollten Austritt von Kühl- bzw. Schmiermittel zu vermeiden, können die Längsnut und die Ringnut zwischen einer werkzeugseitigen vorderen Stirnseite des Aufnahmezapfens und dem Zentriersteg angeordnet sein. Dies ermöglicht eine zuverlässige Abdichtung zwischen dem Aufnahmezapfen und dem Rotationswerkzeug und stellt einen Kühl- bzw. Schmiermittelfluss in Richtung der mit Schneiden versehenen Stirnseite des Rotationswerkzeugs sicher. Die vordere werkzeugseitige Stirnseite des Aufnahmezapfens ist diejenige freie Seite, die dem aufsteckbaren Rotationswerkzeug zugeneigt ist.

Um die Strömungsführung weiter zu verbessern kann eine ringförmige dünnwandige Zwischenhülse an dem Aufnahmezapfen vorgesehen sein, die die Längsnut und die Ringnut zumindest teilweise überdeckt.

Bevorzugt kann die Zwischenhülse kraftschlüssig dichtend mit dem Aufnahmezapfen verbunden sein, so dass das Kühl- bzw. Schmiermittel unabhängig von dem Rotationswerkzeug immer an die Stirnseite des Aufnahmezapfens geleitet wird. Dies wird beispielsweise durch ein Aufpressen oder Aufschrumpfen der Zwischenhülse auf den Aufnahmezapfen erreicht. Neben den genannten reibschlüssigen Verbindungen kann die Zwischenhülse aber auch durch Kleben, Verschrauben und dergleichen fest bzw. lösbar mit der Werkzeugaufnahme verbunden sein. Als Material für die Zwischenhülse kann Stahl, Messing, Aluminium, Kunststoff und dergleichen verwendet werden.

In einer weiteren bevorzugten Ausführungsform kann die Zwischenhülse an ihrem Außenumfang einen Zentrierwulst zur Zentrierung des Rotationswerkzeugs aufweisen. Der Zentrierwulst verformt sich bei der Montage des Rotationswerkzeugs elastisch, kann somit das Rotationswerkzeug zentrieren und wirkt zudem dämpfend.

An dem Innenumfang der Zwischenhülse können in einer vorteilhaften Ausgestaltungsform auch Längs- und/oder Umfangsnuten zur Leitung von Kühl- bzw. Schmiermittel vorgesehen sein.

Derartige Zwischenhülsen sind einfach und günstig herzustellen und ermöglichen es damit, auf einfache Art und Weise Kühl- bzw. Schmiermittelkanäle an der Werkzeugaufnahme auszubilden.

Ebenfalls beansprucht wird eine erfindungsgemäße Werkzeuganordnung mit einer Werkzeugaufnahme der vorbeschriebenen Art und einem Rotationswerkzeug, das eine Aufnahmebohrung aufweist. Erfindungsgemäß ist vorgesehen, dass am Innenumfang der Aufnahmebohrung mindestens eine werkzeugseitige Längsnut zum Transport des Kühl- bzw. Schmiermittels in Längsrichtung des Rotationswerkzeugs ausgebildet ist. Hierdurch wird der Strömungsquerschnitt für das Kühl- bzw. Schmiermittel vergrößert, ohne dass der Querschnitt und damit die Stabilität des Aufnahmezapfens verringert wird.

Bevorzugt ist vorgesehen, dass der mindestens eine Kanal der Werkzeugaufnahme in die mindestens eine werkzeugseitige Längsnut des Rotationswerkzeugs mündet. Hierdurch wird ein strömungsgünstiger Transport des Kühl- bzw. Schmiermittels ermöglicht. Ebenso kann auch eine Längsnut des Rotationswerkzeugs sich zumindest teilweise mit einer werkzeugseitigen Längs- oder Ringnut der Werkzeugaufnahme überdecken, wodurch sich der Querschnitt der Strömungskanäle vergrößert, was sich ebenfalls strömungsgünstig auswirkt. Die mindestens eine werkzeugseitige Längsnut kann parallel zur Längsrichtung des Rotationswerkzeugs, aber auch spiralförmig verlaufen.

Weitere Besonderheiten und Vorzüge der Erfindung ergeben sich aus der folgenden Beschreibung eines bevorzugten Ausführungsbeispiels anhand der Zeichnung. Es zeigen:
- **Figur 1**: eine erfindungsgemäße Werkzeugaufnahme mit einem Rotationswerkzeug in einem Längsschnitt;
- **Figur 2**: eine Detailansicht der Werkzeugaufnahme mit dem Rotationswerkzeug aus Figur 1;
- **Figur 3**: eine perspektivische Ansicht der erfindungsgemäßen Werkzeugaufnahme;
- **Figur 4**: eine Detailansicht einer weiteren Ausführungsform der Werkzeugaufnahme mit dem Rotationswerkzeug im Längsschnitt;
- **Figur 5**: eine Detailansicht einer weiteren Ausführungsform der Werkzeugaufnahme mit dem Rotationswerkzeug im Längsschnitt;
- **Figur 6**: eine Detailansicht einer nicht erfindungsgemäßen Ausführungsform der Werkzeugaufnahme mit dem Rotationswerkzeug im Längsschnitt;
- **Figur 7**: eine weitere Ausführungsform der Werkzeugaufnahme mit dem Rotationswerkzeug und einer zusätzlichen Zwischenhülse und
- **Figur 8**: eine Detailansicht der Zwischenhülse aus Figur 7.

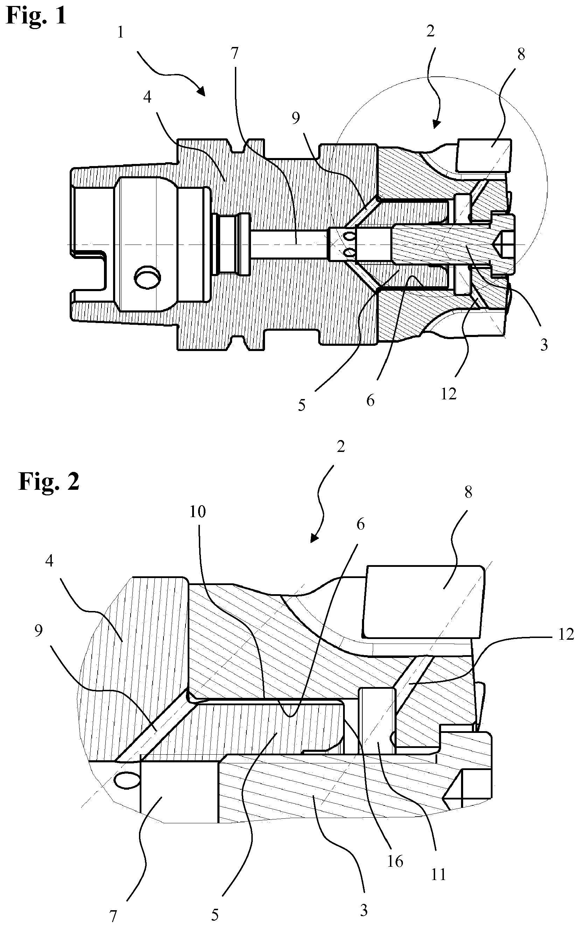

In Figur 1 ist eine Werkzeugaufnahme 1 gezeigt, an der ein Rotationswerkzeug 2 mittels einer Spannschraube 3 befestigt ist. Die Werkzeugaufnahme 1 besteht aus einem Grundkörper 4, an dessen werkzeugseitigen vorderen Ende ein Aufnahmezapfen 5 angeordnet ist. Das Rotationswerkzeug 2 ist als Messerkopf ausgebildet und weist eine mit dem Aufnahmezapfen 5 korrespondierende Aufnahmebohrung 6 auf, so dass das Rotationswerkzeug 2 auf die Werkzeugaufnahme 1 aufgesteckt werden kann und durch den Aufnahmezapfen 5 in radialer Richtung gehalten und zentriert wird.

An der dem Rotationswerkzeug 2 abgewandten Seite der Werkzeugaufnahme 1 sind Spannflächen in Form einer Hohlschaftkegel-Schnittstelle (HSK) zur Befestigung der Werkzeugaufnahme 1 in einer nicht dargestellten Spindel einer Werkzeugmaschine ausgebildet. Über eine zentrale Kühlkanalbohrung 7 wird Kühl- bzw. Schmiermittel von der Spindel zu den Schneiden 8 des Messerkopfs 2 geleitet. Von der zentralen Kühlkanalbohrung 7 ausgehend sind Kanäle in Form von Radialbohrungen 9 vorgesehen, die an dem Außenumfang des Aufnahmezapfens 5 an dem Übergang des Aufnahmezapfens 5 in den Grundkörper 4 der Werkzeugaufnahme 1 münden.

In Figur 2 ist in einer Detailansicht einer weiteren Ausführungsform der Werkzeugaufnahme 1 gezeigt. Ausgehend von den Radialbohrungen 9 sind zur weiteren Leitung des Kühl- bzw. Schmiermittels radiale Längsnuten 10 an dem Außenumfang des Aufnahmezapfens 5 vorgesehen, so dass das Kühl- bzw. Schmiermittel zwischen dem Aufnahmezapfen 5 und dem Messerkopf 2 geleitet wird. Innerhalb des Messerkopfs 2 ist ein Ringraum 11 vorgesehen, in den die Längsnuten 10 münden und von dem ausgehend radiale Zuführbohrungen 12 das Kühl- bzw. Schmiermittel direkt zu den Schneiden 8 des Messerkopfs 2 leiten.

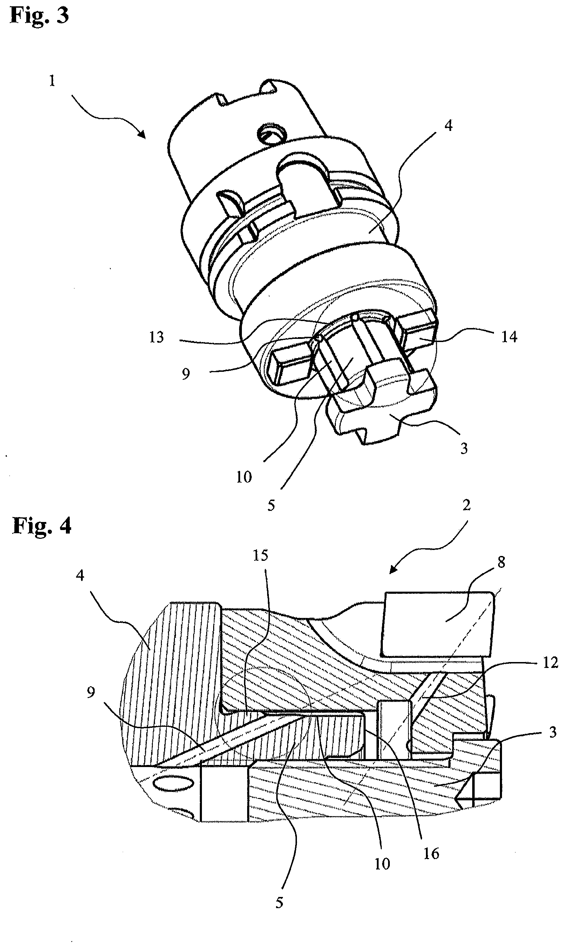

In Figur 3 ist in einer perspektivischen Ansicht der Werkzeugaufnahme 1 der Verlauf der Längsnuten 10 gezeigt. Ebenso wie die Radialbohrungen 9 sind auch die Längsnuten 10 gleichmäßig verteilt über den Umfang des Aufnahmezapfens 5 angeordnet und in Längsrichtung der Aufnahmezapfens 5 ausgerichtet. Die Längsnuten 10 fluchten zudem mit dem Austritt der Radialbohrungen 9. Zur besseren Verteilung des Kühl- bzw. Schmiermittels ist zudem eine radial umlaufende Ringnut 13 vorgesehen, die direkt im Übergang des Aufnahmezapfens 5 in den Grundkörper 4 angeordnet ist. Die Ringnut 13 ermöglicht einen Druckausgleich zwischen den verschiednen Längsnuten 10 und eine gleichmäßige Verteilung des Kühl- bzw. Schmiermittels auf die Längsnuten 10.

Ebenfalls in Figur 3 sind auch verschiedene Mittel zur drehfesten Einspannung des Messerkopfs gezeigt. Der Messerkopf 2 weist üblicherweise eine radiale Quernut auf, in die beim Zusammenbau mit der Werkzeugaufnahme 1 Haltelemente 14 der Werkzeugaufnahme 1 eingreifen. Um den Messerkopf 2 zusätzlich auch in Längsrichtung zu sichern, ist die Spannschraube 3 vorgesehen, die den Messerkopf 2 gegen den Grundkörper der Werkzeugaufnahme 1 verspannt. Aufgrund der genormten Ausgestaltung des Messerkopfes 2 mit der Quernut können in der Ringnut 13 zusätzliche nicht dargestellte Dichtelemente angeordnet werden, um einen ungewollten Austritt von Kühl- bzw. Schmiermittel über die Quernut des Messerkopfs 2 an den Haltelementen 14 vorbei zu verhindern. Alternativ ist es aber auch möglich, die Ringnut 13 im Bereich der Halteelemente zu unterbrechen, um einen ungewollten Austritt von Kühl- bzw. Schmiermittel zu verhindern.

In Figur 4 ist eine weitere Ausführungsform der Werkzeugaufnahme gezeigt, bei der die Radialbohrungen 9 zwar ebenfalls in dem Außenumfang des Aufnahmezapfens 5, jedoch versetzt von dem Übergang des Aufnahmezapfens 5 in den Grundkörper 4, münden. Hierdurch wird es möglich, zwischen dem Austritt der Radialbohrungen 9 am Aufnahmezapfen 5 und dem Übergang des Aufnahmezapfens 5 in den Grundkörper 4 einen Zentriersteg 15 am Außenumfang des Aufnahmezapfens 5 vorzusehen. Der Zentriersteg 15 ist radial umlaufend ausgebildet und kann sich elastisch verformen. Gegenüber dem Innendurchmesser der Aufnahmebohrung 6 des Messerkopfs 2 weist der Zentriersteg 15 ein Übermaß auf, so dass sich eine kraftschlüssige Dichtwirkung ergibt und ein Durchtritt von Kühl- bzw. Schmiermittel in Richtung des Grundkörpers 4 zuverlässig verhindert wird. Die Längsnuten 10 und die Ringnuten 13 sind dabei zwischen der werkzeugseitigen vorderen Stirnseite 16 des Aufnahmezapfens 5 und dem Zentriersteg 15 angeordnet. Durch die elastische Verformung des Zentrierstegs 15 wird außerdem auch eine gute Zentrierung des Messerkopfs 2 auf der Werkzeugaufnahme 1 erreicht.

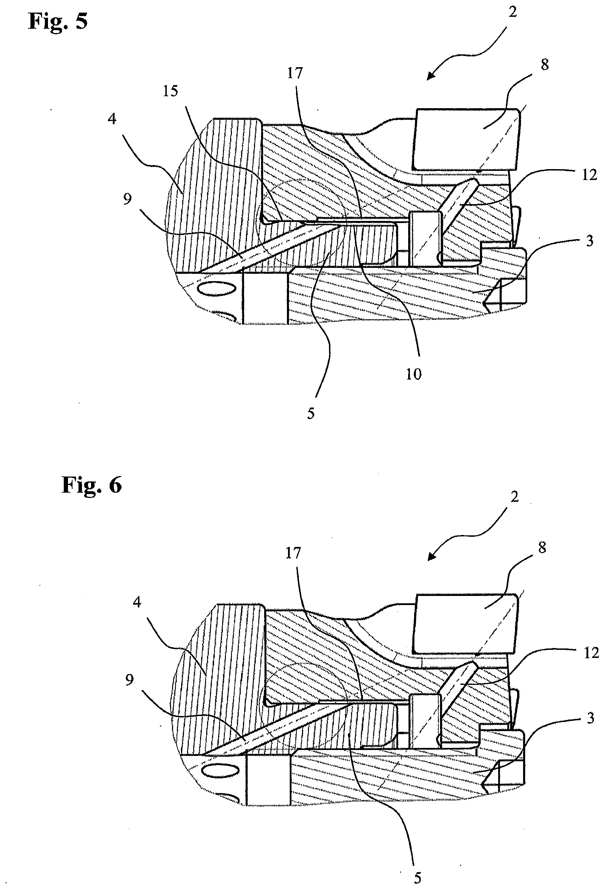

In Figur 5 ist eine Detailansicht einer weiteren Ausführungsform der Werkzeugaufnahme dargestellt. Im Unterschied zu der Ausführungsform in Figur 4 weist der Messerkopf 2 in der Aufnahmebohrung 6 werkzeugseitige Längsnuten 17 auf, die den Längsnuten 10 des Aufnahmezapfens 5 gegenüberliegen. In Summe ergibt sich so ein vergrößerter Strömungsquerschnitt für das Kühl- bzw. Schmiermittel ohne eine Reduzierung des Querschnitts des Aufnahmezapfens 5. In einer hier nicht gezeigten Ausführungsform können die werkzeugseitigen Längsnuten 17 in dem Messerkopf 2 auch in Umfangsrichtung versetzt zu den Längsnuten 10 des Aufnahmezapfens 5 sein. In diesem Fall kann eine Verteilung des Kühl- bzw. Schmiermittels auf die werkzeugseitigen Längsnuten 17 durch eine oder mehrere Ringnuten in dem Messerkopf 2 oder dem Aufnahmezapfen 5 ähnlich der Ringnut 13 in Figur 3 erfolgen.

In Figur 6 ist eine nicht erfindungsgemäße Ausführungsform gezeigt, bei der zwar die Aufnahmebohrung 6 des Messerkopfs 2 die werkzeugseitigen Längsnuten 17 aufweist, aber im Gegensatz zu den vorherigen Ausführungsformen in dem Aufnahmezapfen 5 keine Längsnuten vorhanden sind. Hierdurch wird der Querschnitt des Aufnahmezapfens 5 nicht reduziert und damit auch dessen Festigkeit nicht verringert.

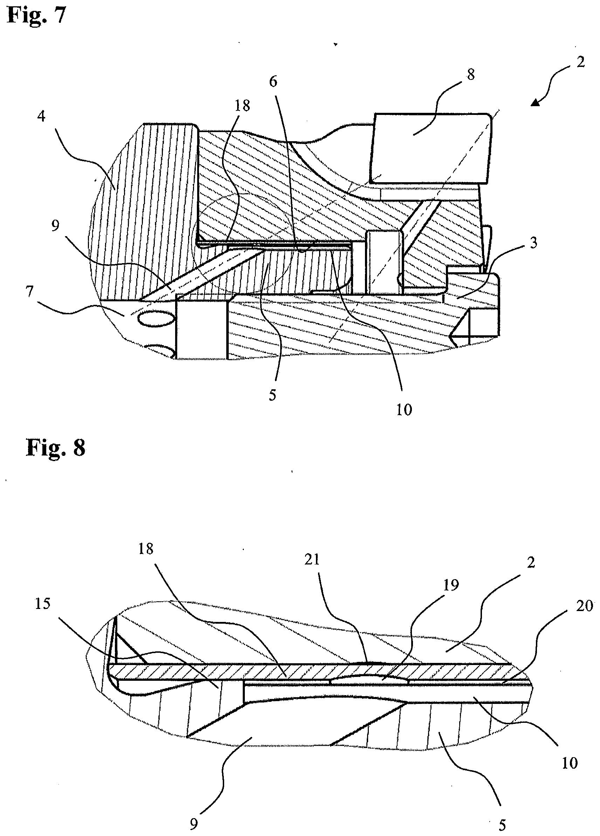

In Figur 7 ist eine weitere Ausführungsform der Werkzeugaufnahme 1 mit dem Rotationswerkzeug 2 gezeigt. Der Aufbau entspricht grundsätzlich der Ausführungsform der Figur 4, mit dem Unterschied jedoch, dass zwischen dem Aufnahmezapfen 5 und der Aufnahmebohrung 6 eine Zwischenhülse 18 angeordnet ist.

In Figur 8 ist der Aufbau der Zwischenhülse 18 in einer Detailansicht dargestellt. Ebenfalls wie auch in der in Figur 4 dargstellten Ausführungsform weist der Aufnahmezapfen 5 einen Zentriersteg 15 auf. Auf diesen Zentriersteg 15 wird die Zwischenhülse 18 aufgeschoben und dichtet gegenüber dem Aufnahmezapfen 5 aufgrund eines geringen Untermmaßes kraftschlüssig ab. In der Zwischenhülse 18 sind Längsnuten 20 ausgebildet, die - vergleichbar mit dem Ausführungsbeispiel der Figur 5 - den Längsnuten 10 des Aufnahmezapfens 5 gegenüberliegen. Zur besseren Verteilung des Kühl- bzw. Schmiermittels ist außerdem eine umlaufende Ringnut 19 in der Zwischenhülse 18 ausgebildet. Zur Zentrierung des Rotationswerkzeugs 2 gegenüber der Zwischenhülse 18 weist diese am Außenumfang einen Zentrierwulst 21 auf, der elastisch verformbar ist und dämpfend wirkt, wobei dieser bei der Montage mit dem Rotationswerkzeugs 2 aufgrund eines Übermaßes geringfügig gequetscht wird.

Auch wenn in der Beschreibung und den Figuren durchweg Bezug auf einen Messerkopf als Rotationswerkzeug 2 genommen wird, ist die Erfindung nicht hierauf beschränkt. Als Rotationswerkzeug im Sinne der Erfindung gelten alle drehbaren rotationssymmetrischen Bearbeitungswerkzeuge mit einer Aufnahmebohrung zum Aufsetzen auf einen Aufnahmezapfen einer Werkzeugaufnahme und mit einer Kühl- und/oder Schmiermittelversorgung der Schneidflächen. Hierzu zählen insbesondere Fräs- und Bohrwerkzeuge.

Die Zwischenhülse kann in Verbindung mit dem erfindungsgemäßen Aufnahmezapfen, aber auch bei den schon bekannten Aufnahmezapfen verwendet werden. Bei letzteren ist die abdichtende Wirkung zweitrangig und es kommt vielmehr die vorteilhafte dämpfende und zentrierende Wirkung der Zwischenhülse zum Tragen.

## Patentansprüche

1. Werkzeugaufnahme (1) mit einem Grundkörper (4) und einem Aufnahmezapfen (5) auf den ein Rotationswerkzeug (2) mit einer korrespondierenden Aufnahmebohrung (6) aufsetzbar ist, wobei in der Werkzeugaufnahme (1) mindestens ein am Außenumfang des Aufnahmezapfens (5) mündender Kanal (9) zum Transport von Kühl- bzw. Schmiermittel angeordnet ist, **dadurch gekennzeichnet, dass** am Außenumfang des Aufnahmezapfens (5) mindestens eine Längsnut (10) zur Leitung des Kühl- bzw. Schmiermittels in Längsrichtung des Aufnahmezapfens (5) angeordnet ist.

2. Werkzeugaufnahme nach Anspruch 1, **dadurch gekennzeichnet, dass** der mindestens eine Kanal (9) am Übergang des Aufnahmezapfens (5) zu dem Grundkörper (4) mündet.

3. Werkzeugaufnahme nach Anspruch 1 oder 2, **dadurch gekennzeichnet, dass** der mindestens eine Kanal (9) in eine Längsnut (10) mündet.

4. Werkzeugaufnahme nach einem der Ansprüche 1 bis 3, **dadurch gekennzeichnet, dass** mehrere Längsnuten (10) durch eine in Umfangsrichtung des Aufnahmezapfens (5) verlaufende Ringnut (13) verbunden sind.

5. Werkzeugaufnahme nach Anspruch 4, **dadurch gekennzeichnet, dass** der mindestens eine Kanal (9) in der Ringnut (13) mündet.

6. Werkzeugaufnahme nach einem der vorhergehenden Ansprüche 1 bis 5, **dadurch gekennzeichnet, dass** der Aufnahmezapfen (5) an dem Außenumfang einen umlaufenden Zentriersteg (15) aufweist.

7. Werkzeugaufnahme nach Anspruch 6, **dadurch gekennzeichnet, dass** die Längsnut (10) und die Ringnut (13) zwischen der vorderen Stirnseite (16) des Aufnahmezapfens (5) und dem Zentriersteg (15) angeordnet ist.

8. Werkzeugaufnahme nach einem der vorhergehenden Ansprüche, **dadurch gekennzeichnet, dass** auf dem Aufnahmezapfen (5) eine ringförmige dünnwandige Zwischenhülse (18) angeordnet ist, die die Längsnut (10) und die Ringnut (13) zumindest teilsweise überdeckt.

9. Werkzeugaufnahme nach Anspruch 8, **dadurch gekennzeichnet, dass** die Zwischenhülse (18) kraftschlüssig dichtend mit dem Aufnahmezapfen (5) verbunden ist.

10. Werkzeugaufnahme nach Anspruch 8 oder 9, **dadurch gekennzeichnet, dass** die Zwischenhülse (18) an ihrem Außenumfang einen Zentrierwulst (21) zur Zentrierung des Rotationswerkzeugs (2) aufweist.

11. Werkzeuganordnung mit einer Werkzeugaufnahme nach einem der Ansprüche 1 bis 10 und einem Rotationswerkzeug (2) mit einer Aufnahmebohrung (6), **dadurch gekennzeichnet, dass** die Aufnahmebohrung (6) am Innenumfang mindestens eine werkzeugseitige Längsnut (17) zur Leitung des Kühl- bzw. Schmiermittels in Längsrichtung des Rotationswerkzeugs (2) aufweist.

12. Werkzeuganordnung nach Anspruch 11, **dadurch gekennzeichnet, dass** der mindestens eine Kanal (9) der Werkzeugaufnahme (1) in die mindestens eine werkzeugseitige Nut (17) des Rotationswerkzeugs (2) mündet.

13. Werkzeuganordnung nach Anspruch 11 oder 12, **dadurch gekennzeichnet, dass** die mindestens eine werkzeugseitige Nut (17) des Rotationswerkzeugs (2) sich zumindest teilweise mit der Längsnut (10) und/oder der Ringnut (13) der Werkzeugaufnahme (1) überdeckt.

## Claims

1. Tool receptacle (1) having a main body (4) and a receiving pin (5) on which a rotary tool (2) having a corresponding receiving bore (6) is able to be placed, wherein at least one duct (9) for transporting coolant and/or lubricant, said duct (9) leading out at the outer circumference of the receiving pin (5), is arranged in the tool receptacle (1), **characterized in that** at least one longitudinal groove (10) for guiding the coolant and/or lubricant in the longitudinal direction of the receiving pin (5) is arranged at the outer circurrference of the receiving pin (5).

2. Tool receptacle according to Claim 1, **characterized in that** the at least one duct (9) leads out at the transition of the receiving pin (5) to the main body (4).

3. Tool receptacle according to Claim 1 or 2, **characterized in that** the at least one duct (9) leads out into a longitudinal groove (10).

4. Tool receptacle according to one of Claims 1 to 3, **characterized in that** a plurality of longitudinal grooves (10) are connected by an annular groove (13) extending in the circumferential direction of the receiving pin (5).

5. Tool receptacle according to Claim 4, **characterized in that** the at least one duct (9) leads out in the annular groove (13).

6. Tool receptacle according to one of the preceding Claims 1 to 5, **characterized in that** the receiving pin (5) has an encircling centring web (15) at its outer circurrference.

7. Tool receptacle according to Claim 6, **characterized in that** the longitudinal groove (10) and the annular groove (13) are arranged between the front end face (16) of the receiving pin (5) and the centring web (15).

8. Tool receptacle according to one of the preceding claims, **characterized in that** an annular thin-walled intermediate sleeve (18) is arranged on the receiving pin (5), said intermediate sleeve (18) at least partially overlapping the longitudinal groove (10) and the annular groove (13).

9. Tool receptacle according to Claim 8, **characterized in that** the intermediate sleeve (18) is connected to the receiving pin (5) in a force-fitting and sealing manner.

10. Tool receptacle according to Claim 8 or 9, **characterized in that** the intermediate sleeve (18) has on its outer circumference a centring bead (21) for centring the rotary tool (2).

11. Tool arrangement having a tool receptacle according to one of Claims 1 to 10 and a rotary tool (2) having a receiving bore (6), **characterized in that** the receiving bore (6) has on its inner circumference at least one tool-side longitudinal groove (17) for guiding the coolant and/or lubricant in the longitudinal direction of the rotary tool (2).

12. Tool arrangement according to Claim 11, **characterized in that** the at least one duct (9) in the tool receptacle (1) leads into the at least one tool-side groove (17) of the rotary tool (2).

13. Tool arrangement according to Claim 11 or 12, **characterized in that** the at least one tool-side groove (17) of the rotary tool (2) at least partially overlaps the longitudinal groove (10) and/or annular groove (13) of the tool receptacle (1).

## Revendications

1. Attachement d'outil (1) comprenant un corps de base (4) et un tenon d'attachement (5) sur lequel peut être monté un outil rotatif (2) pourvu d'un alésage d'attachement (6) correspondant, au moins un canal (9) débouchant au niveau du pourtour extérieur du tenon d'attachement (5) et servant au transport d'un fluide de refroidissement ou de lubrification étant disposé dans l'attachement d'outil (1), **caractérisé en ce qu'**au moins une rainure longitudinale (10) destinée à conduire le fluide de refroidissement ou de lubrification dans la direction longitudinale du tenon d'attachement (5) est disposée au niveau du pourtour extérieur du tenon d'attachement (5).

2. Attachement d'outil selon la revendication 1, **caractérisé en ce que** l'au moins un canal (9) débouche au niveau de la transition du tenon d'attachement (5) au corps de base (4).

3. Attachement d'outil selon la revendication 1 ou 2, **caractérisé en ce que** l'au moins un canal (9) débouche dans une rainure longitudinale (10).

4. Attachement d'outil selon l'une des revendications 1 à 3, **caractérisé en ce que** plusieurs rainures longitudinales (10) sont reliées par une rainure annulaire (13) qui s'étend dans une direction circonférentielle du tenon d'attachement (5).

5. Attachement d'outil selon la revendication 4, **caractérisé en ce que** l'au moins un canal (9) débouche dans la rainure annulaire (13).

6. Attachement d'outil selon l'une des revendications précédentes 1 à 5, **caractérisé en ce que** le tenon d'attachement (5) possède une nervure de centrage (15) circonférentielle au niveau du pourtour extérieur.

7. Attachement d'outil selon la revendication 6, **caractérisé en ce que** la rainure longitudinale (10) et la rainure annulaire (13) sont disposées entre le côté frontal avant (16) du tenon d'attachement (5) et la nervure de centrage (15).

8. Attachement d'outil selon l'une des revendications précédentes, **caractérisé en ce qu'**une douille intermédiaire (18) de forme annulaire à paroi mince est disposée sur le tenon d'attachement (5), laquelle recouvre au moins partiellement la rainure longitudinale (10) et la rainure annulaire (13).

9. Attachement d'outil selon la revendication 8, **caractérisé en ce que** la douille intermédiaire (18) est reliée au tenon d'attachement (5) de manière étanche par assemblage à force.

10. Attachement d'outil selon la revendication 8 ou 9, **caractérisé en ce que** la douille intermédiaire (18) possède sur son pourtour extérieur un bourrelet de centrage (21) servant au centrage de l'outil rotatif (2).

11. Arrangement d'outil comprenant un attachement d'outil selon l'une des revendications 1 à 10 et un outil rotatif (2) pourvu d'un alésage d'attachement (6), **caractérisé en ce que** l'alésage d'attachement (6) possède, sur le pourtour intérieur, au moins une rainure longitudinale (17) côté outil destinée à conduire le fluide de refroidissement ou de lubrification dans la direction longitudinale de l'outil rotatif (2).

12. Arrangement d'outil selon la revendication 11, **caractérisé en ce que** l'au moins un canal (9) de l'attachement d'outil (1) débouche dans l'au moins une rainure (17) côté outil de l'outil rotatif (2).

13. Arrangement d'outil selon la revendication 11 ou 12, **caractérisé en ce que** l'au moins une rainure (17) côté outil de l'outil rotatif (2) chevauche au moins partiellement la rainure longitudinale (10) et/ou la rainure annulaire (13) de l'attachement d'outil (1).
